# EUROPEAN PATENT SPECIFICATION

(11) **EP 2 195 354 B1**
(45) Date of publication and mention of the grant of the patent: **05.12.2018**
(21) Application number: 07868363.8
(22) Date of filing: 03.10.2007
(51) Int. Cl.: C08F 10/00, C08F 4/69

(54) **METHODS OF PREPARING A POLYMERIZATION CATALYST**
VERFAHREN ZUR HERSTELLUNG EINES POLYMERISATIONSKATALYSATORS
PROCÉDÉS DE PRÉPARATION D'UN CATALYSEUR DE POLYMÉRISATION

(43) Date of publication of application: 16.06.2010
(73) Proprietor: CHEVRON PHILLIPS CHEMICAL COMPANY LP, The Woodlands, TX 77380 (US)
(72) Inventor: MCDANIEL, Max, P., Bartlesville OK 74006 (US); CLEAR, Kathy, S., Bartlesville Oklahoma 74006 (US); BENHAM, Elizabeth, A., Spring TX 77379 (US); BEAULIEU, William, B., Tulsa OK 74133 (US)
(74) Representative: Potter Clarkson LLP
(86) International application number: PCT/US2007/080329
(87) International publication number: WO 2009/045215

(56) References cited:
- EP-A- 0 055 864
- WO-A-00/68279
- US-A1- 2006 172 884
- JOZWIAK W ET AL: "INTERACTIONS BETWEEN THE CHROMIUM OXIDE PHASE AND SUPPORT SURFACE; REDISPERSION OF ALPHA-CHROMIA ON SILICA, ALUMINA AND MAGNESIA", JOURNAL OF THE CHEMICAL SOCIETY. FARADAY TRANSACTIONS, ROYAL SOCIETY OF CHEMISTRY, CAMBRIDGE, GB, vol. 93, no. 15, 7 August 1997 (1997-08-07), pages 2583-2589, XP000659935, ISSN: 0956-5000, DOI: 10.1039/A608563F
- JOZWIAK, WOJCIECH K. ET AL JOZWIAK, WOJCIECH K. ET AL: "Interactions between the chromium oxide phase and support surface; redispersion of .alpha.- chromia on silica, alumina and magnesia Interactions between the chromium oxide phase and support surface; redispersion of .alpha.- chromia on silica, alumina and magnesia" JOURNAL OF THE CHEMICAL SOCIETY, FARADAY TRANSACTIONS , 93(15), 2583-2589 CODEN: JCFTEV; ISSN: 0956-5000 JOURNAL OF THE CHEMICAL SOCIETY, FARADAY TRANSACTIONS , 93(15), 2583-2589 CODEN: JCFTEV; ISSN: 0956-5000, 1997, XP000659935
- JOZWIAK W ET AL: "INTERACTIONS BETWEEN THE CHROMIUM OXIDE PHASE AND SUPPORT SURFACE; REDISPERSION OF ALPHA-CHROMIA ON SILICA, ALUMINA AND MAGNESIA", JOURNAL OF THE CHEMICAL SOCIETY. FARADAY TRANSACTIONS, ROYAL SOCIETY OF CHEMISTRY, CAMBRIDGE, GB, vol. 93, no. 15, 7 August 1997 (1997-08-07), pages 2583-2589, XP000659935, ISSN: 0956-5000, DOI: 10.1039/A608563F

## Description

### FIELD

The present disclosure relates to methods of preparing polymerization catalyst compositions comprising a support and one or more metals.

### BACKGROUND

Polymerization catalysts are known in the art, however methods of producing these catalysts may suffer from a variety of drawbacks. Enhancements in preparation methods for polymerization catalysts can reduce the costs associated with catalyst production and improve process economics. Thus, there is an ongoing need to develop new methods of preparing polymerization catalysts. Jozwiak et al (J.Chem.Soc., Faraday Trans., 1997, 93(15), 2583-2589) describes the interactions between the chromium oxide phase and support surface and the redispersion of α-chromia on silica, alumina and magnesia.

### SUMMARY

Disclosed herein is a method comprising contacting a donor support comprising a metal or metal-containing compound and a base support with a recipient support which does not contain a polymerization active compound, species or precursor to generate a mixture, wherein the base support and the recipient support are selected from the group consisting of alumina, silica-titania, aluminophosphate, zirconia, titania, or combinations thereof; and heating the mixture in a range of from 400°C to 1000°C to produce a polymerization catalyst, wherein a metal or a metal-containing compound migrates from the donor support to the recipient support. The donor support may be formed via contact with a chromium-containing compound. The donor support may have not been heated to equal to or greater than 200°C prior to contact with the recipient support. The donor support may have been heated to equal to or greater than 200°C prior to contact with the recipient support. The donor support may have a surface area in the range of from 10 m²/g to 1000 m²/g.

The chromium-containing compound may be a water-soluble compound. The chromium-containing compound may be a hydrocarbon-soluble compound. The donor support may comprise from 0.0001% to 15% chromium by final weight of the original catalyst.

The recipient support may be a virgin support. The recipient support may not contain an effective amount of a polymerization catalytic compound. The recipient support may have a surface area in a range of from 10 m²/g to 1000 m²/g.

The donor support and recipient support may be contacted at a ratio of from about 1:1. The contacting may occur via dry mixing of the donor support and the recipient support. The contacting may occur in a fixed bed or fluidized bed.

The heating of the mixture is in a range of from 400°C to 1000°C. The polymerization catalyst may have an increased amount of the chromium hexavalent species when compared to the donor support.

### BRIEF DESCRIPTION OF THE DRAWINGS

Figure 1 is a plot of the amount of Cr(VI) remaining after activation as a function of initial chromium loading for the samples from Example 1.
Figure 2 is a plot of the retention of Cr(VI) as a function of activation temperature for the samples from Example 2.
Figure 3 is an illustration of a double tube activator.
Figures 4-6 are plots of the retention of Cr(VI) as a function of activation temperature for the samples from Example 3.
Figures 7-8 are plots of the retention of Cr(VI) as a function of activation temperature for the samples from Example 4.
Figure 9 is a plot of the retention of Cr(VI) as a function of activation temperature for the samples from Example 5.
Figures 10-13 are plots of the retention of Cr(VI) as function of activation temperature for the samples from Example 6.
Figures 14-19 are plots of the retention of Cr(VI) as a function of activation temperature for the samples from Example 7.

### DETAILED DESCRIPTION

Disclosed herein are methods of contacting a donor support comprising a metal or metal-containing compound and a base support with a recipient support which does not contain a polymerization active compound, species or precursor to generate a mixture, wherein the base support and the recipient support are selected from the group consisting of alumina, silica-titania, aluminophosphate, zirconia, titania, or combinations thereof; and heating the mixture in a range of from 400°C to 1000°C to produce a polymerization catalyst, wherein a metal or a metal-containing compound migrates from the donor support to the recipient support. The donor support may be formed by contacting one or more metals (e.g., chromium) or metal-containing compounds with a base support. The recipient support may be the same support material or a different support material than the base support material of the donor support. The donor support may comprise metal species (e.g., active and/or inactive species) such that upon contact of the donor support with the recipient support, all or a portion of the metal species (e.g., active and/or inactive) are mobilized and transferred from the donor support to the recipient support, where such mobilized and transferred metal species may be active metal species. As a result, both the donor support and the recipient support may comprise an effective amount of one or more active metal species to catalyze one or more reactions. The various catalyst components and the methods of making the catalysts are described in more detail herein.

The donor support comprises one or more metals or metal-containing compounds and a base support (i.e., a metallized support). Such metals may be present in the donor support as active metal species, inactive metal species, or both. The metal may be added to the base support via any suitable means such as ion-exchange, incipient wetness, pore fill, aqueous impregnation, organic solvent impregnation, melt coating, dry mixing, or combinations thereof. In embodiments, the donor support comprises an amount of one or more metals effective to catalyze a polymerization reaction such as olefin polymerization. Examples of suitable metals include Group VI metals such as Cr, Mo, W, or combinations thereof. The base support may comprise one or more inorganic materials such as silica as described in more detail herein.

In an embodiment, the donor support comprises chromium and may be prepared by contacting a chromium-containing compound with a base support. The chromium-containing compound may be one or more compounds comprising chromium in the hexavalent oxidation state (hereinafter Cr(VI)) or comprising a material suitable for conversion to Cr(VI). In an embodiment, the chromium-containing compound comprises a water-soluble chromium compound; alternatively the chromium-containing compound comprises a hydrocarbon-soluble chromium compound. The chromium-containing compound may be a chromium (II) compound, chromium (III) compound, or combinations thereof. Suitable chromium (III) compounds include, but are not limited to, chromium carboxylates, chromium naphthenates, chromium halides, chromium pyrrolides, chromium benzoates, chromium dionates, chromium nitrates, chromium sulfates, or combinations thereof. Specific chromium (III) compounds include, but are not limited to, chromium (III) isooctanoate, chromium (III) 2,2,6,6-tetramethylheptanedionate, chromium (III) naphthenate, chromium (III) chloride, chromium (III) tris(2-ethylhexanoate), chromic fluoride, chromium (III) oxy-2-ethylhexanoate, chromium (III) dichloroethylhexanoate, chromium (III) acetylacetonate, chromium (III) acetate, chromium (III) butyrate, chromium (III) neopentanoate, chromium (III) laurate, chromium (III) sulfate, chromium (III) oxalate, chromium (III) benzoate, chromium (III) pyrrolide(s), chromium (III) perchlorate, chromium (III) chlorate, or combinations thereof. Suitable chromium (II) compounds include, but are not limited to, chromous fluoride, chromous chloride, chromous bromide, chromous iodide, chromium (II) bis(2-ethylhexanoate), chromium (II) acetate, chromium (II) butyrate, chromium (II) neopentanoate, chromium (II) laurate, chromium (II) stearate, chromium (II) oxalate, chromium (II) benzoate, chromium (II) pyrrolide(s), chromous sulfate, or combinations thereof. Examples of other suitable chromium-containing compounds include tertiary butyl chromate in a hydrocarbon liquid; chromium trioxide in water; chromium acetate in water; chromium nitrate in alcohol; zerovalent organochromium compounds such as pi bonded chromium complexes, for example, dicumene chromium and dibenzene chromium; or combinations thereof. Pi bonded chromium complexes are described in U.S. Pat. No. 3,976,632.

The amount of chromium present in the donor support may range from 0.1% to 50% based on the final weight of the donor support, alternatively from 0.5% to 10%, or from 1% to 5%.

The donor support comprises a base support. The base support is an inorganic oxide selected from alumina, titania, silica-titania, aluminophosphates and zirconia or combinations thereof. The base support may have a surface area and pore volume effective to provide for the production of an active donor support (e.g., polymerization catalyst). In an embodiment, the base support possesses a surface area in the range of from 10 to 1000 m²/gram, a pore volume in the range of from 0.1 to 4.0 cm³/gram and an average particle size in the range of from 5 to 500 µm. In another embodiment, the base support has a surface area in the range of from 50 to 500 m²/gram, a pore volume of from 0.5 to 3.5 cm³/gram, and an average particle size of from 10 to 200 µm. In yet another embodiment, the base support has a surface area in the range of from 200 to 400 m²/gram, a pore volume from 0.8 to 3.0 cm³/gram, and an average particle size of from 25 to 150 µm. In still another embodiment, the base support has a surface area in the range of from 200 to 450 m²/gram, a pore volume in the range of from 1 to 2.5 cm³/gram and an average particle size in the range of from 40 to 120 µm. In another embodiment, the base support has a surface area in the range of from 250 to 400 m²/gram, a pore volume of from 1.25 to 2.5 cm³/gram, and an average particle size of from 40 to 120 µm. In yet another embodiment, the base support has a surface area in the range of from 250 to 600 m²/gram, a pore volume in the range of from 1.5 to 1.75 cm³/gram, and an average particle size of from 40 to 120 µm. Generally, the average pore size of the base support ranges from 1 to 100 nm (10 to 1000 Angstroms). In one embodiment, the average pore size of the base support is in the range of from 5 to 50 nm (50 to 500 Angstroms), while in yet another embodiment the average pore size ranges from 7.5 to 35 nm (75 to 350 Angstroms). The base support may be prepared using any technique known to one of ordinary skill in the art for the preparation of such materials.

In an embodiment, the base support comprises any of the oxides previously described herein. Such supports may be prepared using techniques known to one of ordinary skill in the art for the preparation of such materials.

The base support may comprise alumina. The alumina support may be made using known methods such as for example: reacting sodium aluminate, which is basic, with aluminum sulfate, which is acidic; neutralizing an aluminum salt with a base such as ammonia or ammonia hydroxide or sodium aluminate; performing flame hydrolysis of an aluminum compound; or performing hydrolysis of an organic solution of an aluminum compound by, e.g., adding water to an alcohol solution of aluminum isopropoxide (Al(OC₃H₇)₃). In an embodiment, the alumina support may have a surface area ranging from 10 m²/g to 400 m²/g and a pore volume ranging from 0.1 cc/gto 1.8 cc/g.

Alternatively, the base support comprises aluminophosphate. The aluminophosphate may be prepared by hydrothermal crystallization at elevated temperatures of aluminophosphate gels containing a molecular structure-forming template as described in U.S. Patent NO. 4,310,440. Alternatively, aluminophosphate may be made by adding base to an acidic solution containing Al⁺³ and PO₄⁻³ ions, or alternatively it may be made by treating an alumina or aluminate support with a phosphate source such as phosphoric acid. In an embodiment, the aluminophosphate support may have a surface area ranging from 100 m²/g to 500 m²/g and a pore volume ranging from 1.0 cc/g to 2.5 cc/g.

Alternatively, the base support comprises silica-titania. The silica-titania support may be made by co-gelation, heterogeneous co-precipitation, or surface impregnation. In an embodiment, the silica-titania support may have a surface area ranging from 250 m²/g to 600 m²/g and a pore volume ranging from 1.0 cc/g to 3.0 cc/g.

The amount of base support present in the donor support may be equal to or greater than 50 percent (%) support by total weight of the donor support, alternatively greater than 75% donor support, alternatively greater than 95% donor support.

In an embodiment, the donor support is prepared by contacting a chromium-containing compound and a base support. It should be understood that other metal-containing compounds may be used in addition to or in lieu of the chromium containing compound. The chromium-containing compound and the base support may be of the type previously described herein. In an embodiment, the donor support may be prepared by contacting a chromium-containing compound and a base support consisting essentially of alumina, to form a Cr/alumina support. In yet another embodiment, the donor support may be prepared by contacting a chromium-containing compound and a base support comprising silica-titania to form a Cr/silica-titania support. In yet another embodiment, the donor support may be prepared by contacting a chromium-containing compound and a base support comprising aluminophosphate to form a Cr/aluminophosphate support.

The chromium-containing compound and base support may be contacted by any means known to one of ordinary skill in the art. Examples of suitable contacting techniques include without limitation ion-exchange, incipient wetness, pore fill, aqueous impregnation, organic solvent impregnation, melt coating, dry mixing, or combinations thereof. Following contacting of the components, the donor support may be washed and/or dried to remove any solvent used during impregnation of the metal. The drying may be carried out in a temperature range of from 25°C to 300°C, alternatively from 50°C to 200°C, alternatively from 80°C to 150°C and for a time of from 0.1 min to 10 hours, alternatively from 0.2 min to 5 hours, alternatively from 30 min to 1 hour.

In some embodiments, following contacting of the chromium-containing compound and base support, the donor support may be activated by thermal treatment such as heating and/or calcining. For example, activation of the donor support may be achieved via heating the donor support in an oxidizing environment resulting in a donor support comprising Cr(VI). The heating may be carried out in a temperature range from 200°C to 1,000°C, alternatively from 300°C to 900°C, or alternatively from 400°C to 850°C for a time period of from 0.5 hours to 30 hours, alternatively from 1 hour to 15 hours, or alternatively from 3 hours to 10 hours. The oxidizing atmosphere may comprise oxygen, air, or combinations thereof.

The recipient support may be a virgin support.

A virgin support is a support compound that has not been contacted with and/or does not comprise a polymerization active compound. Such virgin supports may be commercially available compounds (e.g., base supports) that are used "as is" having not undergone any additional treatment following manufacture by a supplier, and thus are in an unadulterated state. Herein a polymerization active compound refers to a compound or species which may catalyze a polymerization reaction (e.g., polymerization of alpha olefins) or a precursor of such compounds or species. The virgin support does not comprise an amount of one or more metals effective to catalyze a polymerization reaction such as olefin polymerization. For example, the virgin support does not include Group VI metals such as Cr, Mo, and/or W in amounts effective to catalyze polymerization reactions. In an embodiment, the virgin support does not comprise chromium or a chromium-containing compound in an amount effective to catalyze a polymerization reaction.

In embodiments, the recipient support may have no thermal history. In other embodiments, the recipient support has a thermal history that may include calcination and/or drying. Conditions suitable for the calcination and/or drying of such materials are known to one of ordinary skill in the art. In an embodiment, the recipient support is a virgin support that has not undergone any additional heat treatment since being manufactured, or alternatively has not been previously heated to a temperature of equal to or greater than 200 °C.

In an embodiment, a method of preparing a polymerization catalyst comprises contacting the donor support with a recipient support. The polymerization catalyst may be prepared by contacting of the donor support and recipient support in a ratio of from 100:1 to 1:100, alternatively from 10:1 to 1:10, alternatively from 2:1 to 1:5. Contacting of the donor support and recipient support may be carried out using any technique and under any conditions compatible with the components of this system and able to afford the intimate mixing of the component particles. For example, the donor support may be contacted with the recipient support via fluidized bed or by dry mixing followed by calcining in a static fixed bed, or by co-drying and co-calcining in a rotary kiln, or combinations thereof. In some embodiments, the contacting may be performed in an inert atmosphere, such as, for example, in the presence of an inert gas such as in the presence of nitrogen, argon and/or carbon dioxide.

The recipient support may comprise any of the base support compounds described herein, provided that the recipient support does not contain a polymerization active compound, species, or precursor. In other embodiments, the recipient support consists essentially of one or more inorganic compounds, including the base support compounds described herein. In an embodiment the recipient support comprises the same material as the base support in the donor compound. Alternatively, the recipient support comprises a different material than the base support in the donor compound. The donor support may comprise Cr/alumina and the recipient support comprises alumina; or alternatively the donor support comprises Cr/silica-titania and the recipient support comprises silica-titania.

In the various embodiments disclosed herein, contacting of the donor support and recipient support may occur in one or more contact zones. A contact zone is a zone in which the components are commingled and/or combined, and thereby contacted. The contact zone may be disposed in a vessel, e.g. a storage tank, tote, container, mixing vessel, or reactor; a length of pipe, e.g. a tee, inlet, injection port, or header for combining component feed lines into a common line; or any other suitable apparatus for bringing the components into contact. As used herein, the terms contacted and combined refer to any addition sequence, order, or concentration for contacting or combining two or more catalyst components. As a result of such contact or combination, the catalyst components may remain discrete, unattached or unbonded particles or may otherwise physically not combine, attach, bond, co-support, or agglomerate. In some embodiments, contacting of components may occur in one or more upstream contact zone(s) prior to further contacting with other catalyst component(s) in one or more downstream contact zone(s). Where a plurality of contact zones are employed, contacting may occur simultaneously across the contact zones, sequentially across the contact zones, or both, as is suitable for a given embodiment. Contacting may be carried out in a batch or continuous process, as is suitable for a given embodiment.

In embodiments utilizing a vessel for contacting the components, the components may be optionally mixed by a mixer disposed in the vessel and the formed mixture may then be further processed. In embodiments, utilizing a tee or other means for combining lines such as a header, an optional in-line mixer may be placed in the commingled catalyst feed line to ensure that adequate contacting of the combined components takes place, and the mixture is thus formed as it passes through the commingled feed line.

In an embodiment, the contacting may occur in a fixed bed reactor after mixing; alternatively mixing can occur in a fluidized bed reactor where the components are mixed and contacted in situ under conditions that allow for the intimate mixing of the donor support and recipient support. For example, the donor and recipient support may be introduced to a fluidized bed and allowed to contact in the presence of oxygen or air at an airflow rate of from 0.00305 to 0.3 m/s (0.01 to 1.0 ft/s). The polymerization catalyst thus formed *in situ* may be exposed directly to reaction components under conditions suitable for carrying out a user-desired process.

In an embodiment, the mixture of the donor support and recipient support may be thermally treated following contacting; alternatively the donor support and recipient support may be simultaneously contacted and thermally treated. The thermal treatments serves to activate the mixture of the donor support and recipient support to form the polymerization catalyst. The thermal treatments may further serve to mobilize a portion of the metal from the donor support to the recipient support to form the polymerization catalyst. In embodiments, the mobilized metal starts in an inactive state on the donor support (e.g., Cr(III)) and is in an active state on the recipient support (e.g., Cr(VI)). The mixture of the donor support and recipient support may be activated in-situ via heat treatment (e.g., calcination) as described previously herein. The resulting mixture of donor support and recipient support functions as a polymerization catalyst.

The polymerization catalyst comprising chromium may contain at least a portion of the total chromium as Cr(VI). Without wishing to be limited by theory, the polymerization catalyst when functioning as a polymerization catalyst may have the active site metals (i.e. Cr(VI)) undergo reaction with ethylene to generate divalent chromium Cr(II) which may serve as the active site for polymerization of an alpha olefin. In an embodiment Cr(VI) is reduced to Cr(II) during the polymerization of an alpha olefin. In another embodiment, the Cr(VI) may be reduced to Cr(II) by pre-contacting with a reducing agent such as for example and without limitation carbon monoxide (CO). In yet another embodiment, the Cr(VI) may be reduced to Cr(II) by contacting with a cocatalyst such as for example and without limitation an alkyl aluminum compound. Examples of suitable alkyl aluminum compounds include trialkyl compounds such as triethyl tripropyl and triisobutyl aluminums; alkyl aluminum hydrides such as diisobutyl aluminum hydride and diethyl aluminum hydride; and alkyl aluminum halides such as diethyl aluminum chloride.

The polymerization catalysts of the present disclosure are intended for any alpha olefin polymerization method known in the art, using various types of polymerization reactors. As used herein, "polymerization reactor" includes any polymerization reactor capable of polymerizing alpha olefin monomers to produce homopolymers or copolymers. Such homopolymers and copolymers are referred to as resins or polymers. The various types of reactors include those that may be referred to as batch, slurry, gas-phase, solution, high pressure, tubular or autoclave reactors. Gas phase reactors may comprise fluidized bed reactors or staged horizontal reactors. Slurry reactors may comprise vertical or horizontal loops. High pressure reactors may comprise autoclave or tubular reactors. Reactor types can include batch or continuous processes. Continuous processes could use intermittent or continuous product discharge. Processes may also include partial or full direct recycle of un-reacted monomer, un-reacted comonomer, and/or diluent.

Polymerization reactor systems of the present disclosure may comprise one type of reactor in a system or multiple reactors of the same or different type. Production of polymers in multiple reactors may include several stages in at least two separate polymerization reactors interconnected by a transfer device making it possible to transfer the polymers resulting from the first polymerization reactor into the second reactor. The desired polymerization conditions in one of the reactors may be different from the operating conditions of the other reactors. Alternatively, polymerization in multiple reactors may include the manual transfer of polymer from one reactor to subsequent reactors for continued polymerization. Multiple reactor systems may include any combination including, but not limited to, multiple loop reactors, multiple gas reactors, a combination of loop and gas reactors, multiple high pressure reactors or a combination of high pressure with loop and/or gas reactors. The multiple reactors may be operated in series or in parallel.

According to one aspect of the disclosure, the polymerization reactor system may comprise at least one loop slurry reactor. Such reactors may comprise vertical or horizontal loops. Monomer, diluent, catalyst and optionally any comonomer may be continuously fed to a loop reactor where polymerization occurs. Generally, continuous processes may comprise the continuous introduction of a monomer, a catalyst, and a diluent into a polymerization reactor and the continuous removal from this reactor of a suspension comprising polymer particles and the diluent. Reactor effluent may be flashed to remove the solid polymer from the liquids that comprise the diluent, monomer and/or comonomer. Various technologies may be used for this separation step including but not limited to, flashing that may include any combination of heat addition and pressure reduction; separation by cyclonic action in either a cyclone or hydrocyclone; or separation by centrifugation.

A typical slurry polymerization process (also known as the particle form process), which is well known in the art is disclosed, for example, in U.S. Patent Nos. 3,248,179, 4,501,885, 5,565,175, 5,575,979, 6,239,235, 6,262,191 and 6,833,415.

Suitable diluents used in slurry polymerization include, but are not limited to, the monomer being polymerized and hydrocarbons that are liquids under reaction conditions. Examples of suitable diluents include, but are not limited to, hydrocarbons such as propane, cyclohexane, isobutane, n-butane, n-pentane, isopentane, neopentane, and n-hexane. Some loop polymerization reactions can occur under bulk conditions where no diluent is used. An example is polymerization of propylene monomer as disclosed in U.S. Patent No. 5,455,314.

According to yet another aspect of this disclosure, the polymerization reactor may comprise at least one gas phase reactor. Such systems are known in the art and may employ a continuous recycle stream containing one or more monomers continuously cycled through a fluidized bed in the presence of the catalyst under polymerization conditions. A recycle stream may be withdrawn from the fluidized bed and recycled back into the reactor. Simultaneously, polymer product may be withdrawn from the reactor and new or fresh monomer may be added to replace the polymerized monomer. Such gas phase reactors may comprise a process for multi-step gas-phase polymerization of olefins, in which olefins are polymerized in the gaseous phase in at least two independent gas-phase polymerization zones while feeding a catalyst-containing polymer formed in a first polymerization zone to a second polymerization zone. One type of gas phase reactor is disclosed in U.S. Patent Nos. 5,352,749, 4588,790 and 5,436,304.

According to still another aspect of the disclosure, a high pressure polymerization reactor may comprise a tubular reactor or an autoclave reactor, both of which are known in the art. Tubular reactors may have several zones where fresh monomer, initiators, or catalysts are added. Monomer may be entrained in an inert gaseous stream and introduced at one zone of the reactor. Initiators, catalysts, and/or catalyst components may be entrained in a gaseous stream and introduced at another zone of the reactor. The gas streams may be intermixed for polymerization. Heat and pressure may be employed appropriately to obtain optimal polymerization reaction conditions.

According to yet another aspect of the disclosure, the polymerization reactor may comprise a solution polymerization reactor wherein the monomer is contacted with the catalyst composition by suitable stirring or other means. A carrier comprising an inert organic diluent or excess monomer may be employed. If desired, the monomer may be brought in the vapor phase into contact with the catalytic reaction product, in the presence or absence of liquid material. The polymerization zone is maintained at temperatures and pressures that will result in the formation of a solution of the polymer in a reaction medium. Agitation may be employed to obtain better temperature control and to maintain uniform polymerization mixtures throughout the polymerization zone. Adequate means are utilized for dissipating the exothermic heat of polymerization. These reactors are known in the art.

Polymerization reactors suitable for the present disclosure may further comprise any combination of at least one raw material feed system, at least one feed system for catalyst or catalyst components, and/or at least one polymer recovery system. Suitable reactor systems for the present disclosure may further comprise systems for feedstock purification, catalyst storage and preparation, extrusion, reactor cooling, polymer recovery, fractionation, recycle, storage, loadout, laboratory analysis, and process control.

Conditions that are controlled for polymerization efficiency and to provide resin properties include temperature, pressure and the concentrations of various reactants. Polymerization temperature can affect catalyst productivity, polymer molecular weight and molecular weight distribution. Suitable polymerization temperature may be any temperature below the de-polymerization temperature according to the Gibbs Free energy equation. Typically this includes from 60°C to 280°C, for example, and from 70°C to 110°C, depending upon the type of polymerization reactor.

Suitable pressures will also vary according to the reactor and polymerization type. The pressure for liquid phase polymerizations in a loop reactor is typically less than 6895 kpa (1000 psig). Pressure for gas phase polymerization is usually at about 1379 kpa-3447 kpa (200 - 500 psig). High pressure polymerization in tubular or autoclave reactors is generally run at about 137895 kpa to 517107 kpa (20,000 to 75,000 psig). Polymerization reactors can also be operated in a supercritical region occurring at generally higher temperatures and pressures. Operation above the critical point of a pressure/temperature diagram (supercritical phase) may offer advantages.

In an embodiment, a slurry polymerization process is employed in which the catalyst is suspended in an inert organic medium and agitated to maintain it in suspension throughout the polymerization process. The organic medium may, e.g., be a paraffin, a cycloparaffin, or an aromatic. For the production of ethylene polymers, the slurry polymerization process may be carried out in a reaction zone at a temperature of from 50°C to 110°C and at a pressure in the range of from 689.5 kpa to 4826.3 kpa (100 psia to about 700 psia) or higher. At least one monomer is placed in the liquid phase of the slurry in which the catalyst is suspended, thus providing for contact between the monomer and the catalyst. The activity and the productivity of the catalyst are relatively high. As used herein, the activity refers to the grams of polymer produced per gram of solid catalyst charged per hour, and the productivity refers to the grams of polymer produced per gram of solid catalyst charged.

The concentration of various reactants can be controlled to produce resins with certain physical and mechanical properties. The proposed end-use product that will be formed by the resin and the method of forming that product determines the desired resin properties. Mechanical properties include tensile, flexural, impact, creep, stress relaxation and hardness tests. Physical properties include density, molecular weight, molecular weight distribution, melting temperature, glass transition temperature, temperature melt of crystallization, density, stereoregularity, resistance to crack growth, long chain branching and rheological measurements.

The concentrations of monomer, co-monomer, hydrogen, co-catalyst, modifiers, and electron donors are important in producing these resin properties. Comonomer is used to control product density. Hydrogen is used to control product molecular weight. Co-catalysts can be used to alkylate, scavenge poisons and control molecular weight. Modifiers can be used to control product properties and electron donors affect stereoregularity. In addition, the concentration of poisons must be minimized since they impact the reactions and product properties.

After polymerization, additives and modifiers can be added to the polymer to provide better processing during manufacturing and for desired properties in the end product. Additives include surface modifiers such as slip agents, antiblocks, tackifiers; antioxidants such as primary and secondary antioxidants; pigments; processing aids such as waxes/oils and fluoroelastomers; and special additives such as fire retardants, antistats, scavengers, absorbers, odor enhancers, and degradation agents.

Polymers such as polyethylene homopolymers and copolymers of ethylene with other mono-olefins may be produced in the manner described above using the catalyst (i.e.,polymerization catalyst) prepared as described herein. Polymer resins produced as disclosed herein may be formed into articles of manufacture or end use articles using techniques known in the art such as extrusion, blow molding, injection molding, fiber spinning, thermoforming, and casting. For example, a polymer resin may be extruded into a sheet, which is then thermoformed into an end use article such as a container, a cup, a tray, a pallet, a toy, or a component of another product. Examples of other end use articles into which the polymer resins may be formed include pipes, films, bottles, fibers, and so forth. Additional end use articles would be apparent to those skilled in the art.

In an embodiment, the production of a polymerization catalyst by the methodologies disclosed herein may lead to an increased amount of Cr(VI) available on the support and the formation of an increased number of catalytically active polymerization sites resulting in the polymerization catalyst having a higher productivity level than the donor support. Since the recipient support is more economical than the chromium containing compound, the polymerization catalyst resulted by the methodologies disclosed herein may result in an improvement in the overall process economics.

### EXAMPLES

The invention having been generally described, the following examples are given as particular embodiments of the invention and to demonstrate the practice and advantages thereof. It is understood that the examples are given by way of illustration and are not intended to limit the specification of the claims to follow in any manner.

The following materials were used throughout the remainder of the examples as indicated. The silica support material used was ES70 which is a support that is commercially available from Inneos Co. and has an average particle size of 50 µm, a surface area of 300 m²/g, and a pore volume of 1.6 cc/g.

The Cr/silica component was made by impregnating the silica to incipient wetness with 5 wt% Cr as an aqueous CrO₃ solution. The solution was then stir-dried by evaporation at room temperature until free flowing.

The alumina base used was alumina-A which is another support that is commercially available from W.R. Grace. The alumina has an average particle size of 100 µm, a surface area of 300 m²/g, and a pore volume of 1.3 cc/g.

The Cr/alumina component was made by impregnating the alumina base with about 6 wt% Cr as an aqueous CrO₃ solution. The solution was then stir-dried by evaporation at room temperature until free flowing.

The silica, Cr/silica, alumina, and Cr/alumina were then dried individually in a fluidized bed by raising the temperature up to 200°C. At this stage, all components were referred to as virgin. The drying was done to ensure that all liquid water was removed from pores before the physical blending of these components in order to avoid chromatographic movement of pore water and Cr from one component to another. In some examples, the components were activated by calcining to a temperature higher than 200°C using a procedure described herein. The support component (either silica or alumina) and the Cr-containing component (either Cr/silica or Cr/alumina) were mixed in a ratio of 3:1 of support: Cr-containing compound. Specifically, about 10 grams of the mixture was placed in a 44.5 mm (1.75 inch) quartz tube fitted with a sintered quartz disk at the bottom. While the mixture was supported on the disk, pure oxygen, previously dried through a 13x molecular sieve column, was blown up through the disk at the linear rate of 0.045 to 0.051 cubic meter/hour (1.6 to 1.8 standard cubic feet per hour) to create a fluidized bed. In some examples, dried nitrogen or air was used as the fluidizing gas in place of oxygen. An electric furnace around the quartz tube was then turned on and the temperature was raised at the rate of 400°C per hour to 400°C (first co-activation temperature). The mixture was allowed to fluidize for 24 hours in the dry oxygen. Then, some portion of the mixture was collected as the first sample and stored under dry nitrogen for protection from the atmosphere before testing. The remaining of the mixture was then heated to 500°C (second activation temperature) at the same heating rate, allowed to fluidize for 24 hours in dry oxygen, followed by the second sampling. Similarly, the procedure was carried out at co-activation temperatures of 600°C, 700°C, 800°C, and 900°C for the third, fourth, fifth, and sixth samplings respectively. In this way, the last sample taken at 900°C had experienced the cumulative effect of all previous co-activation temperatures. This fact will be utilized in the interpretations of results later herein.

The Cr(VI) content on the samples was measured by titration against ferrous ammonium sulfate. Specifically, about 0.5-1 gram of the sample was immersed in 2N sulfuric acid solution and stirred for 30 minutes prior to the titration. Two drops of phenanthroline iron (II) sulfate solution was added as the indicator. Ferrous ammonium sulfate titrant solution was calibrated against a standard solution of potassium dichromate, all of which are commercially available from Aldrich Co.

### REFERENCE EXAMPLE 1

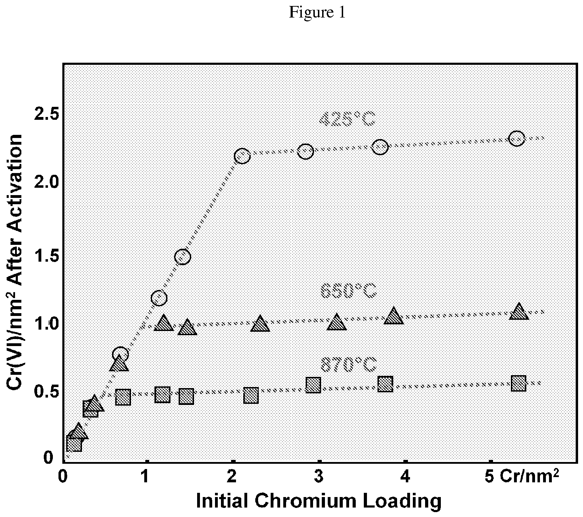

In this example, a simple analytical technique was used to explore the saturation level of Cr(VI) at different calcining conditions. The technique relied on the previously defined tendency of supports to "saturate" with Cr(VI). For each substrate, and set of calcining conditions, the surface will only hold a certain maximum level of Cr(VI). If more is applied the excess simply decomposes into trivalent chromium. Figure 1 is a plot of Cr(VI)/nm² activation as a function of the initial chromium loading after calcining at 425°C, 650°C and 870°C as indicated, which shows this saturation behavior. These catalysts were made by impregnation of CrO₃ onto a Davison Grade 952 silica. Calcination of the sample was carried out in a 1.875 inch diameter quartz tube, outfitted with a sintered quartz distribution plate. Fluidization gas was dry oxygen at 1.4 ft³/h velocity with a hold time of 5 hours.

Thus, a silica can be co-activated with a Cr/silica, one that contains more Cr than is allowed to be Cr(VI) by its saturation coverage. After activation the Cr(VI) content of the mixture was determined by titration. If the conversion to Cr(VI) is higher than would be possible from the Cr/silica component alone, then migration must have occurred to the pure silica in order to support the extra Cr(VI). The results demonstrate the maximum loading of Cr(VI) under these conditions occurs at 425 °C.

### REFERENCE EXAMPLE 2

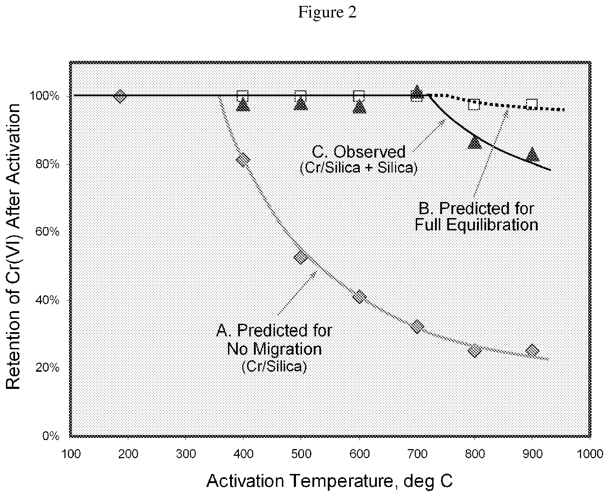

In this example, migration between virgin silicas was investigated. One part of virgin Cr/silica was physically mixed with three parts virgin silica and the two co-activated by fluidization at various temperatures in dry oxygen for 24 hours. By "virgin" it is meant that the component had no prior heat treatment other than being dried at 200°C to first remove any residual liquid pore water prior to mixing. Co-activation experiments were done every 100°C between 400°C and 900°C. As a "control" for the series, similar one-component activations of Cr/silica alone were also conducted. The results of these experiments are shown in Figure 2, indicating the retention of Cr(VI) on these samples.

The change in Cr(VI) is quantified in Figure 2, which plots the amount of Cr(VI) retained after activation as a function of the activation temperature. In this case the axis is not expressed as Cr(VI) atoms/nm², but instead as a percent of the total chromium present that is retained as Cr(VI). The lower curve, curve A, plots the one-component activation of Cr/silica alone. This curve shows the saturation behavior observed in Figure 1. The silica cannot hold more Cr(VI) than this value, so even at 400°C there is already a loss of Cr(VI). Curve A also represents what would be observed from the co-activated mixture of Cr/silica with silica if there were no migration of Cr between the two components. In curve A the amount of Cr(VI) retained is limited by the amount of silica surface available only on the one Cr/silica component.

In contrast the upper curve, curve B, in Figure 2 represents the amount of Cr(VI) that could be expected from full equilibration of the Cr between the two silica sources. This curve is simply curve A multiplied by 4, since there is now 4 times as much silica surface available (from a blend ratio of 1 part Cr/silica and 3 parts silica). There is now enough surface available that only at 800°C and 900°C would saturation coverage be expected to result in a small loss of Cr(VI). At other temperatures all of the chromium should remain hexavalent, being not limited by the saturation coverage maximum.

Curve C of Figure 2 plots the Cr(VI) retention values actually observed from the co-activated mixtures. Since every point on curve C is above that on curve A, it is clear that a large migration of chromium has definitely taken place, even at 400°C. It is possible that migration would have occurred at even lower temperatures, but this was considered beyond the reliability of the technique. Since all of the chromium is hexavalent between 400 and 700°C, one cannot tell if full equilibration of the Cr(VI) has occurred between the two sources of silica, or something less. The points at 800 and 900°C, however, do suggest some quantification of the amount of transfer. About 85% of full equilibration has been reached under these conditions, although one cannot tell at what temperature this level of transfer occurred.

### REFERENCE EXAMPLE 3

Four possible methods of transferring chromium to a virgin silica support were investigated.

### I. Transfer by Chromatography

The possibility of chromium transfer by chromatographic evaporation and wicking of liquid water from pores was investigated. Commercial silicas and Cr/silica catalysts usually still contain 8-10% pore water even after drying at 100°C. During heat treatment between 100 and 150°C, the pore water was visually observed to be leaving the pores. Local gradients of Cr in the bed were seen carried from the interior of the bed by pore water moving upward by evaporation. Thus, Cr could transfer from one particle to another, depending on how much pore water is left behind after drying.

### II. Transfer by Chromium Evaporation

The possibility that transfer of chromium occurs through evaporation and re-deposition of the chromium onto its neighboring particle was investigated. Two different Cr/silica catalysts were analyzed by X-ray fluorescence (XRF) before and after activation at 900°C for 24 hours in flowing oxygen. The results of this analysis are listed in Table 1. The results demonstrate that within the accuracy of the experiment no Cr was lost.

| Table 1. Analysis by XRF of Cr/silica before and after activation. | | |
|---|---|---|
| | Cr/Si Ratio by XRF | |
| Sample | Virgin | After 24h at 900°C |
| Catalyst 1 | 0.113 | 0.112 |
| Catalyst 2 | 0.082 | 0.104 |

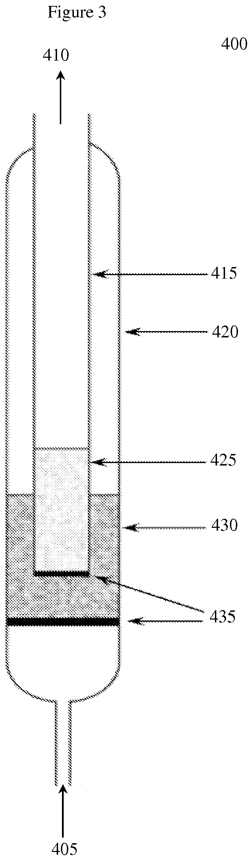

Cr evaporation as the mechanism of Cr mobility was investigated using a double tube activator as illustrated in Figure 3. Referring to Figure 3, the double tube activator 400 was constructed from quartz glass where the outer tube 420 contained Cr/silica 430 while the inner tube 415 contained silica 425; both the Cr/silica 430 and silica 425 were supported on porous sintered quartz disks 435 which were about 2 mm thick; oxygen entered the system from feed stream 405 and exited the system from outlet stream 410. During activation the design forced oxygen to first move though the Cr/silica bed 430 at high temperature, presumably carrying any volatile Cr with it, and then through the silica bed 425 held at exactly the same temperature. Once loaded, the double-tube activator 400 was surrounded by an electrical furnace (not shown) and activation was carried out as described above in dry oxygen for 24 hours at 900°C. Although several tests were conducted in this way, no evidence was ever found of Cr transfer from one bed to the other. This suggests that the transfer does not proceed via vaporization of the Cr, or at least that it cannot span a 2 mm distance in the gas phase at 900°C.

### III. Transfer by Redox Cycling (Migration in N₂)

An alternate mechanism of Cr migration through particle contact was investigated. The possibility that Cr migrates through a cycling between Cr(III) and Cr(VI) on the surface was investigated. This mechanism is shown in Scheme 1:

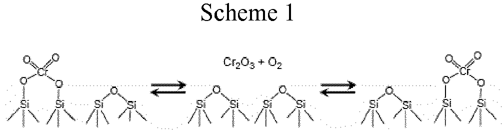

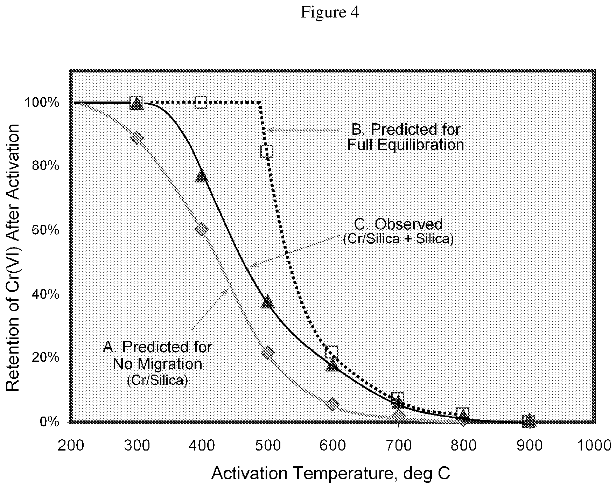

Such cycling requires oxidation of Cr(III) by oxygen gas. In the absence of oxygen transfer should not be possible. Therefore the experiment in Example 2 was repeated, except that the calcining was done in flowing dry nitrogen instead of oxygen. Cr(VI)/silica, containing about 5% Cr and dried at 200°C, was mixed in a 1:3 ratio with virgin silica, also previously dried at 200°C. The mixture was then heated to various temperatures, ranging from 300°C to 900°C, and held there for 24 hours fluidized under flowing nitrogen. After each heating step, a sample was taken for analysis, and then the remaining mixture was heated up to the next progressively higher temperature. For comparison a control series was also made using the Cr(VI)/silica alone which was exposed to the same heating procedure. The results of these experiments are shown in Figure 4.

The results demonstrate that there is major loss in Cr(VI) when the calcining is done in nitrogen. Cr(VI) decomposes into Cr(III) and oxygen at an early temperature, and the oxygen byproduct is swept away by the nitrogen, making reoxidation impossible. Despite the severe and early loss of Cr(VI) however, it is clear the some transfer did occur. Curve A in Figure 4 shows the control run with Cr/silica heated alone where no transfer occurs. This curve represents the maximum amount of Cr(VI) that can be supported by the original Cr/silica component. Curve B is just curve A multiplied by four. It represents the result expected in the event that there is complete equilibration between the two silica sources. Curve C plots the actual results obtained from the co-activation of the mixture. It lies intermediate between curve A and curve B, indicating that some transfer occurred, even at 300°C, despite rapid decomposition of Cr(VI). At 600°C the migration became so strong that it almost reached a full equilibrium. That is, curve C and curve B merge at about 600°C. This suggests that redox cycling, although it almost certainly occurs, is not the only or even the primary means of Cr movement.

### IV. Transfer by Hydrolysis (Migration between 900°C Silicas)

Another mechanism of Cr migration was investigated. In this case Cr migration by hydrolysis and reformation of Cr-O-Si bonds, either by neighboring surface silanols or by traces of moisture in the fluidization gas was considered. This mechanism is depicted in Scheme 2:

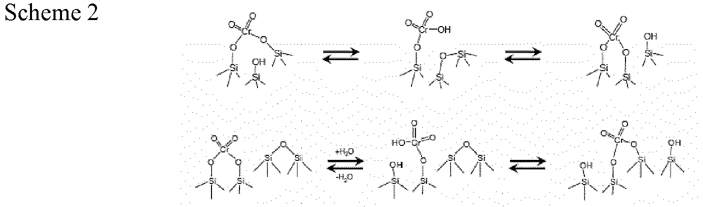

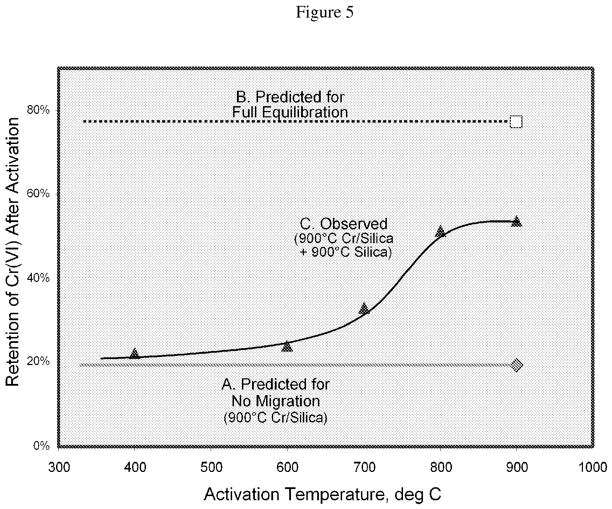

To test these possibilities Cr/silica and silica were again co-activated as before, except that each component had first been activated alone in oxygen for 24 hours at 900°C before mixing. Cr/silica containing 5% Cr was activated alone at 900°C and silica was also calcined alone at 900°C. Then they were mixed together in a ratio of 1:3 (Cr/silica to silica) and co-activated at various temperatures from 400°C to 900°C in dry oxygen for 24 hours. If moisture is required for Cr migration, then transfer of Cr should be severely inhibited under these conditions. The results of these experiments are plotted in Figure 5.

Again three lines are shown. Line A shows the control run with 900°C Cr/silica. Having been already calcined at 900°C, re-activation at lower temperatures changes nothing. The Cr(VI) amount is irreversibly set by the 900°C treatment, and so a horizontal straight line is obtained. This line also represents the results expected from the mixture if no migration occurs. Line B is line A multiplied by four, representing the Cr(VI) values expected if there is full equilibration of the Cr between the two components. And line C plots the results actually obtained from the mixture.

In this example there is almost no migration of Cr at 400°C and even up to 700°C the migration is rather minor. Only at the highest temperatures, 800-900°C does the transfer become more significant, reaching about 60% of full equilibration. This result is a strong indication that the extent of surface annealing or dehydration governs the transfer of Cr(VI). Whether this indicates the direct participation of surface silanols or not is uncertain. It could also reflect the general annealing and reorganization of the surface that accompanies high temperatures. It is possible that for the Cr to be mobile, the silica surface itself must also be somewhat mobile. Once annealed at 900°C, it may require similar temperatures to obtain significant mobility again. Alternatively one might speculate that traces of moisture in the gas stream are needed from migration, and that once calcined at 900°C, the supports do not release moisture until that temperature is again approached.

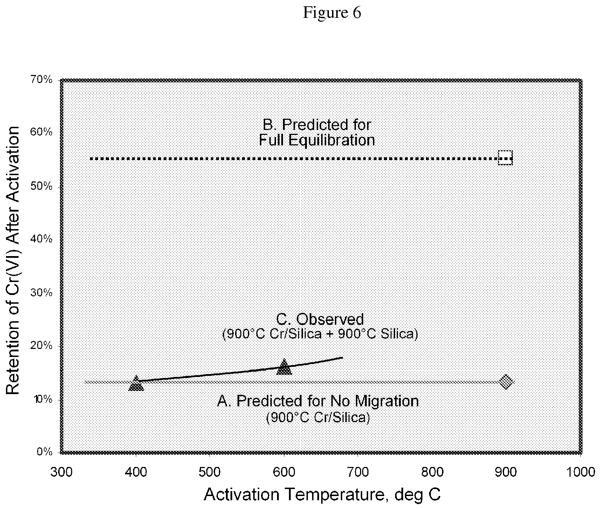

To distinguish between these two possibilities, the experiment was repeated, except that the co-activation was performed in oxygen that was first sparged through distilled water, to reach 100% humidity at 25°C. That is, Cr/silica, calcined in dry oxygen, was mixed with silica, also calcined in dry oxygen, and the two were co-activated in wet oxygen at 400°C and 600°C. If moisture in the gas stream is primarily responsible for transfer, one might expect to see more migration than was seen in Figure 4 above. The results are shown in Figure 6. There is no change in migration compared to Figure 5. This suggests that moisture in the gas stream is not the primary driver of Cr transfer, or that 900°C silica is not easily rehydrated under these conditions.

### REFERENCE EXAMPLE 4

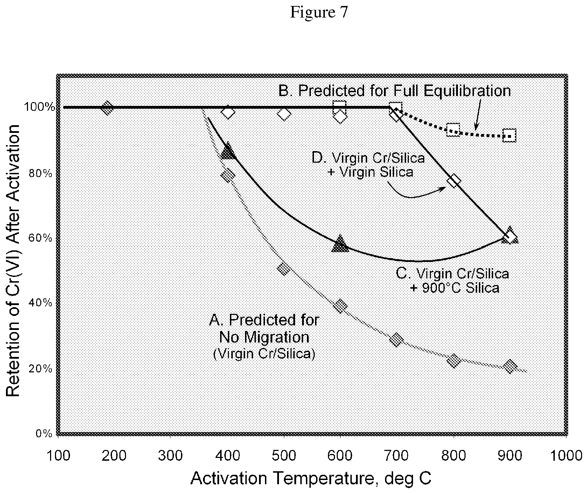

In this example, migration between virgin and calcined silica was investigated. Virgin Cr/silica (dried at 200°C) was mixed with three parts silica that had already been calcined at 900°C. This mixture was then co-activated at 400-900°C in oxygen for 24 hours. The results of this experiment are shown in Figure 7.

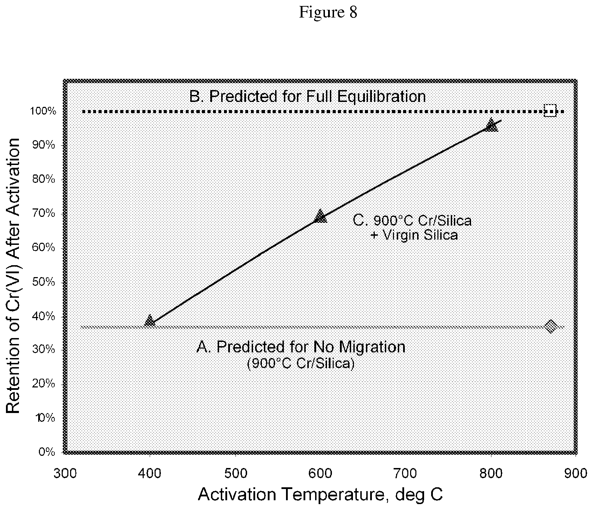

Comparing the experimental curve C with control curves A and B, a small amount of migration was observed to have occurred at 400°C. This is in agreement with Figure 5 (Example 3), and suggests that both surfaces need to be hydrated for effective transfer at low temperatures. More migration occurred at 600°C, although it is not clear that this represents any more than occurred in Figure 5 (Example 3). By 900°C, however, significant migration has occurred, representing about 56% of the equilibrium value. Also shown in Figure 7, for comparison, is curve D derived from co-activation of virgin Cr/silica with virgin silica. There is a major difference between curve C and curve D, strongly indicating that Cr moves more easily on the hydrated materials at low temperature. At 900°C, however, both curves merge as might be expected. The reverse experiment was also carried out, in which 900°C Cr/silica was co-activated with 200°C silica. In this case the Cr/silica was a commercial grade sold by Inneos as EP30X containing 1% Cr and having an average particle size of about 100 microns. It was commercially activated in dry air, then co-activated with three parts of virgin silica in dry oxygen for five hours. The results are shown in Figure 8. Again no migration was observed at 400°C. However, by 600°C the transfer of Cr became quite significant, and by 800°C it had reached full equilibration. Thus the transfer from an annealed surface to a virgin one seems to have occurred more easily than when carried out in the reverse direction. The catalyst was observed to have a color change from green to yellow which indicated a migration of the Cr to the virgin silica.

### REFERENCE EXAMPLE 5

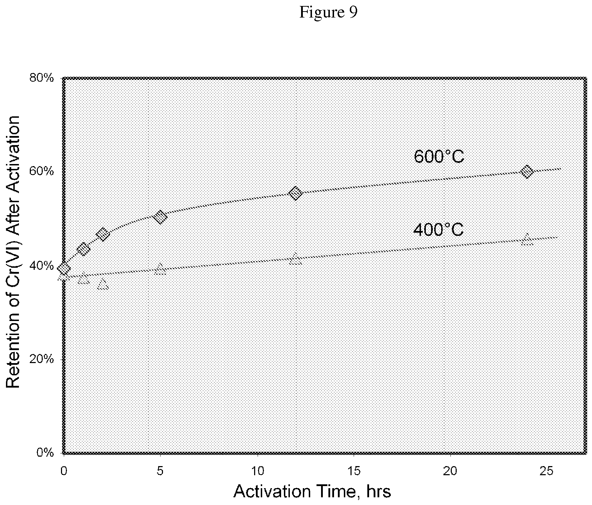

In an effort to understand how quickly the transfer rate of Cr occurs between silicas within the temperature range of 400°C to 900°C, two experiments were done using intermediate temperatures. Cr/silica and silica, both individually calcined at 600°C, were physically mixed in a 1:3 ratio, then co-activated in oxygen for various times ranging from 1 to 24 hours. One series of samples was co-activated at 400°C and another at 600°C. The results of these experiments are plotted in Figure 9. It is clear from the graph that equilibration is not immediate, but takes prolonged contact under these conditions. Equilibrium has not been reached even after 24 hours. Predictably migration was somewhat faster at 600°C than at 400°C.

### EXAMPLE 6

Three types of migrations were investigated; migration between virgin aluminas, between calcined aluminas, and between virgin and calcined aluminas.

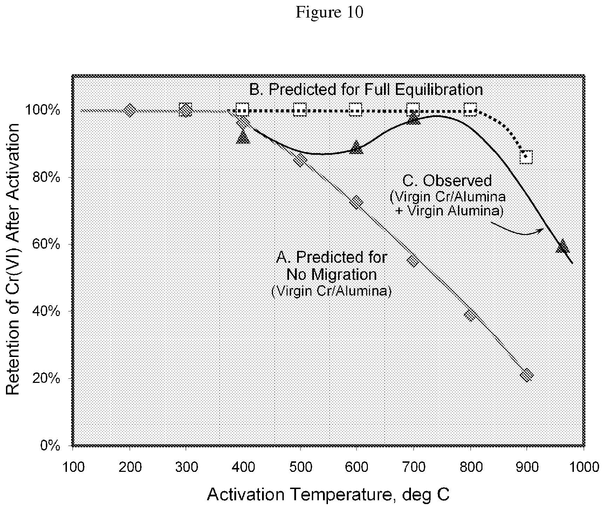

In order to investigate the migration between virgin alumina, some tests were carried out to determine whether Cr(VI) could transfer between alumina bases. Figure 10 plots the result of co-activating 1 part virgin Cr/alumina with 3 parts virgin alumina at various temperatures. Although the test becomes more uncertain for alumina, it was observed that the same pattern of Cr migration seen between silicas also applies to aluminas. Migration can be seen at temperatures as low as 400-500°C, and at 900°C the transfer reached about 85-90% of the value expected from full equilibration. This behavior is comparable to what was observed between virgin silicas in Figure 2 (Example 2) under the same conditions.

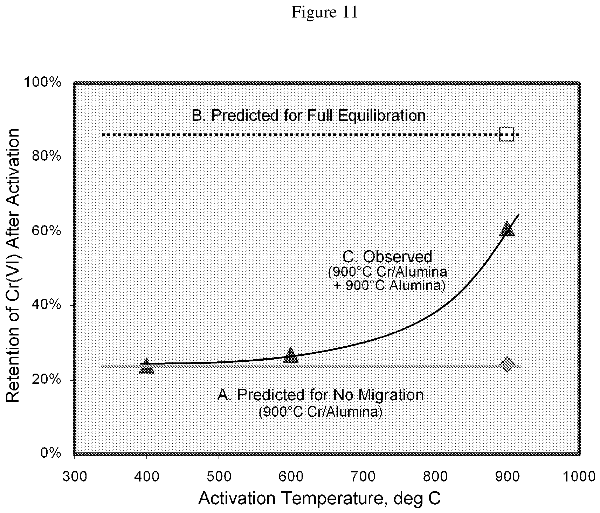

For migration between calcined aluminas, the two alumina components were calcined before mixing and co-activation to determine what effect this had on the Cr migration. Cr/alumina, previously calcined at 900°C, was mixed with three parts alumina, which had also been calcined at 900°C. These two components were mixed and the co-activated in oxygen at various temperatures as described above. The results of these experiments are shown in Figure 11. No migration at all was observed at 400°C, and barely a trace at 600°C. By 900°C, however, Cr transfer did occur, achieving about 60-65% of the value expected from full equilibration. This behavior is very similar to that observed between calcined silicas in Figure 5 (Example 3). This result is another indication that the extent of surface annealing or dehydration strongly influences the transfer of Cr(VI).

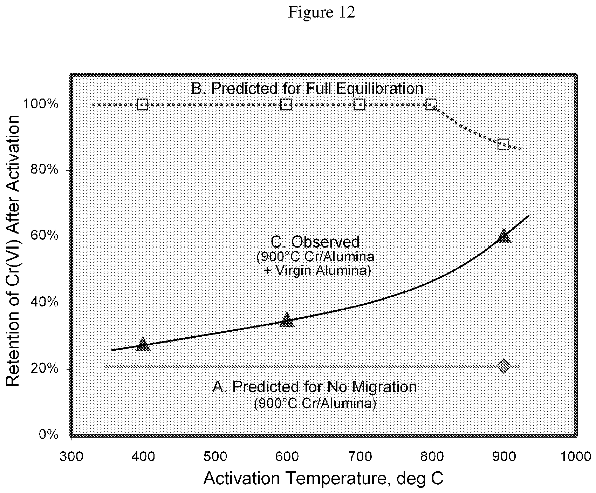

For migration between virgin and calcined aluminas, the Cr/alumina, which had already been calcined at 900°C in oxygen, was co-activated with virgin alumina at various temperatures. The degree of migrations was plotted in Figure 12. Referring to Figure 12 at 400°C, very little migration was observed. The amount increased slightly at 600°C, and then became more significant at 900°C, reaching 61% of the equilibrium value. Thus the transfer behavior between aluminas was similar to that observed between silicas, in Figure 8 (Example 4).

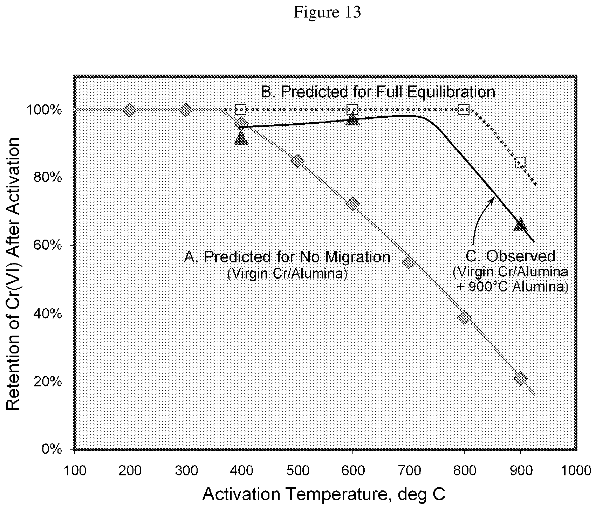

Figure 13 shows the opposite combination. Virgin Cr/alumina was co-activated with alumina that had been previously calcined at 900°C. At 400°C it is not clear whether migration occurred, but given the result in Figure 12, it seems likely that little transfer may have occurred. By 600°C significant transfer was observed, and at 900°C a high degree of migration occurred, reaching about 70-75% of full equilibration. Thus once again the transfer behavior between aluminas seems very similar to that between silicas, as shown in Figure 7 (Example 4) for comparison.

### REFERENCE EXAMPLE 7

In this example, migration between alumina and silica was investigated. The four combinations that were investigated are between virgin silica and virgin alumina, calcined silica and calcined alumina, virgin silica and calcined alumina, and calcined silica and virgin alumina.

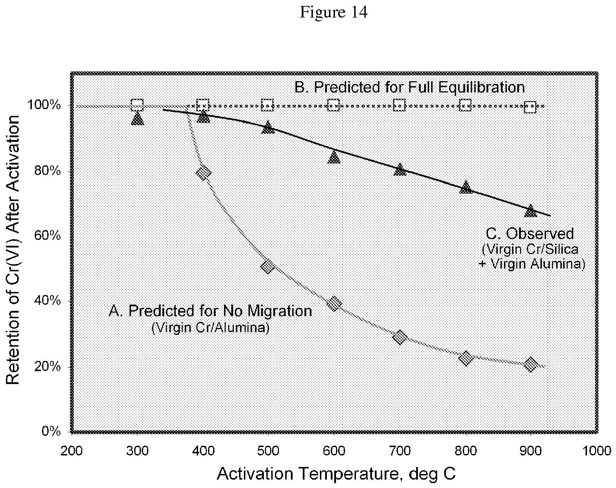

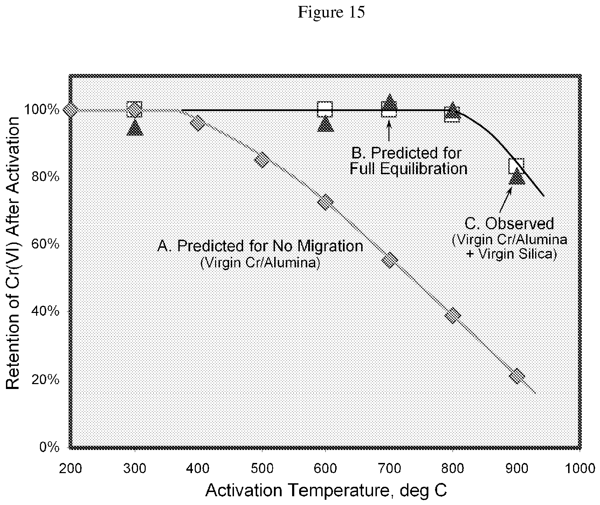

First, migration between virgin silica and virgin alumina was investigated. Both combinations, virgin Cr/silica and virgin alumina as well as virgin Cr/alumina and virgin silica, were investigated. Chromium could also be transferred during co-activation from silica to alumina and vice versa. Figure 14 shows the results of an experiment in which virgin Cr/silica was mixed with virgin alumina in a 1:3 ratio, then co-activated in oxygen at various temperatures for 24 hours as described above. Transfer from silica to alumina seemed to be very similar to that from silica to silica in Figure 5 (Example 3). A high degree of mobility was observed at the lowest temperature tested, 400°C. By 900°C transfer had reached about 60% of full equilibration. Migration in the reverse direction seemed to occur even more willingly. Figure 15 plots the results of an experiment in which virgin Cr/alumina was mixed with virgin silica in a 1:3 ratio, then co-activated as before. This was the only case found in which the transfer reached full equilibrium.

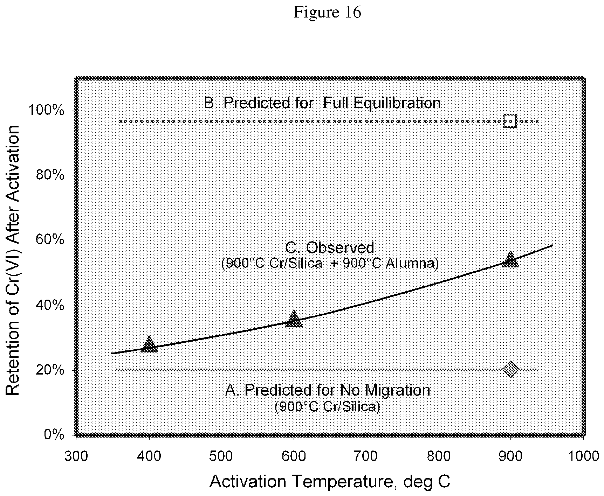

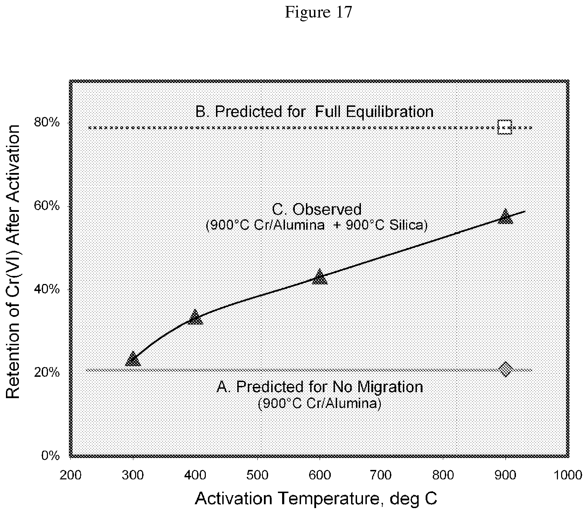

Secondly, migration between calcined silica and calcined alumina was investigated. Transfer was also possible from calcined silica to calcined alumina. Figure 16 plots the results obtained when Cr/silica, previously calcined at 900°C, was co-activated with three parts of alumina, also previously and individually calcined at 900°C. The transfer behavior was again very similar to two calcined silicas, shown above in Figure 5 (Example 3). Little or no migration was observed after co-activation at 400°C. Slightly more was observed at 600°C, and significantly more at 900°C, where 44% of full equilibration was reached. Transfer in the opposite direction again seemed to occur a little more willingly. Figure 17 plots the results obtained from co-activation of 900°C Cr/alumina with three parts of 900°C silica. The pattern is very similar except that in this case 63% of equilibration was achieved at 900°C.

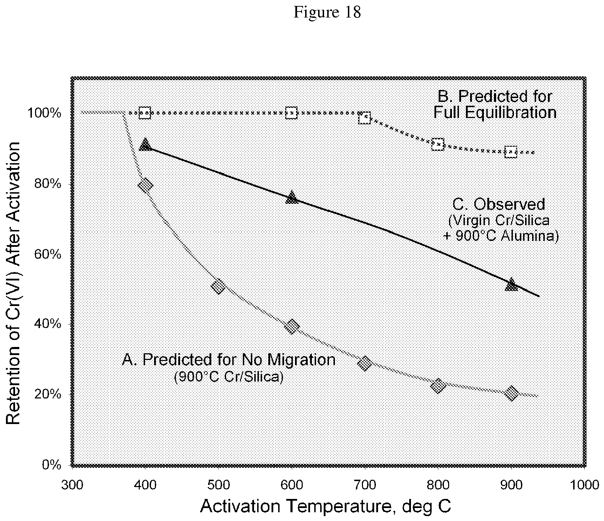

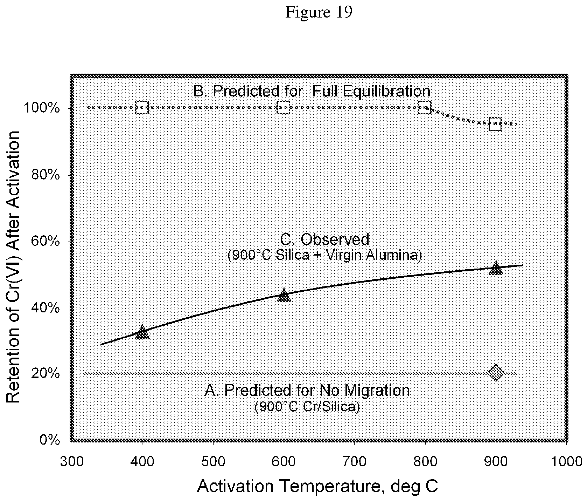

Finally, migration between silica to alumina, one of which was calcined was investigated. Both alternatives, virgin Cr/Silica and calcined alumina as well as calcined Cr/silica and virgin alumina, were investigated. Finally two other experiments were also performed in which Cr was transferred from silica to alumina. In Figure 18 virgin Cr/silica was co-activated with alumina that had already been calcined at 900°C. Migration was observed at the lowest temperature tested, 400°C, and by 900°C it had reached half the equilibrium value. In Figure 19 Cr/silica, previously calcined at 900°C, was co-activated with virgin alumina. Little transfer occurred at 400°C, more at 600°C, and at 900°C about 46% of the equilibrium value was reached.

### REFERENCE EXAMPLE 8

For comparison between a fixed and fluidized bed, several experiments were carried out with the silica and Cr/silica components from Example 2 having an average particle size of 50-100 µm. In this experiment the reaction vessel used for fluidization 100 is illustrated in Figure 20. Referring to Figure 20, reaction vessel 100 comprised an activator tube 105 with a top port 110, a bottom port 115, and a support porous disk 120. 10 cm of white virgin silica 125 was placed on the porous disk support 120. The virgin silica 125 was then covered with about 1 cm of a catalyst layer 130 comprising green Cr/silica that had been commercially activated at 900°C. The catalyst layer 130 was then covered with a second 10 cm layer of virgin silica 135 such that the catalyst layer 130 was sandwiched between two virgin silica layers 125 and 135. For a fixed bed experiment, air entered from the top port 110 and exited from the bottom port 115. For a fluidized bed experiment, air entered from the bottom port 115 and exited from the top port 110. The temperature was raised at 150°C/hr to 900°C where it was held for 24 hours.

When the experiment started there was a sharp demarcation between the layers. Since the Cr/silica in the catalyst layer 130 had a dark green color, the boundary was easy to see visually. It was expected that migration would cause a blurring of the layer boundaries, up and down, as Cr gradients formed due to macroscopic movement of Cr into the silica layers. However, after the experiment was concluded the boundary demarcations were found to be very sharp. A yellow transition band of only about 0.5 to 1 mm was seen at the interface of the two layers. This suggests that there is considerable resistance to Cr flow. Without wishing to be limited by theory, a particle of Cr/silica at the boundary does lose some fraction of its Cr into its immediate contact sphere of silica particles. Those recipient particles in turn then pass on an even smaller fraction of their Cr to their sphere of contacted particles. Thus, a sharp gradient develops in a short distance and the drive for bulk flow is lost. In contrast, a fluidized bed continually exposes each Cr/silica particle to a well mixed representative sample of the un-promoted silica particle population.

Another type of fixed bed experiment was also carried out. A reaction vessel similar to that illustrated in Figure 20 was utilized. The samples were a 50/50 mixture of the same virgin silica and green 900°C commercial Cr/silica. In this case, the two components were allowed to fluidize for an hour at room temperature to ensure homogeneous mixing by reversing the air flow inlet and outlet stream as described above. Then the air flow was reversed again to create a fixed bed of already mixed components. Activation was carried out again at 900°C with air flow from the top to prevent particle movement. Reoxidation of the Cr(III) occurred quickly in this environment, indicating movement of the Cr. When the tube had been at 900°C for only 1 hour, it was cooled and examined. The bed had already changed from green to orange-beige, indicating a very fast migration in the fixed bed. After 5 hours at 900°C the sample had turned completely orange. The Cr(VI) values obtained are listed in Table 3, where it can be seen that after 5 hours about 95% of the had become hexavalent. The success of Cr transfer in this second fixed bed experiment, compared to the failure of Cr transfer in the first fixed bed experiment, again suggests a very limited transfer distance. That is, Cr probably transfers (in this time frame) from a Cr/silica particle to a shell of surrounding particles that are only few particles deep. When the bed is already well mixed, this is not a handicap.

| Table 3. Comparison of Cr transfer in fixed versus fluid bed. | | | | | | |
|---|---|---|---|---|---|---|
| | | | Fixed Bed Results | | Fluid Bed Results | |
| First Component | Second Component | Co-Activalion* at 900°C | % Cr(VI) | Conversion to Cr(VI) | % Cr(VI) | Conversion to Cr(VI) |
| 850°C Cr/Silica | None | None | 0.525 | 58% | 0.525 | 58% |
| 850°C Cr/Silica | Virgin Silica* | 1 hr | 0.341 | 81% | 0.352 | 80% |
| 850°C Cr/Silica | Virgin Silica* | 5 hr | 0.401 | 95% | 0.417 | 94% |
| * *Co-activation in same dry air flow*. *Cr*/*silica to silica blend ratios*, *fixed bed: 1.14 to 1*, *fluid bed*: *1.03 to 1*. | | | | | | |

A third experiment was conducted using a fluidized bed similar to that illustrated in Figure 20 to investigate chromium mobility. For comparison, a similar 50/50 experiment described above was utilized. Air flow and temperatures used were unchanged. After 1 hour at 900°C the fluidized bed had also taken on an orange-beige color, and was almost indistinguishable from the fixed bed catalyst. After 5 hours it had also turned orange. The Cr(VI) values are listed in Table 3, and are almost indistinguishable between the two beds. Thus the two modes of activation, fixed and fluidized bed, seemed to be similarly effective, at least in this experiment.

### REFERENCE EXAMPLE 9

This example demonstrates the migration of Cr in a commercial setting to provide a more efficient utilization of the available Cr. A commercial catalyst sold by Inneos as EP30X (Sample 9A) was charged to a commercial activator. The activator was a 1066.8mm (42 inch) diameter vessel equipped with PROCEDYNE distributor plate. 272.2 kg (600 lbs) of sample 9A was charged, and this charge was calcined in dry air fluidization gas moving through the vessel as described above at a flow rate of 0.076 m/s (0.25 ft/s). The activation temperature was ramped up to 857.2°C (1575°F) at a rate of 1.36°C (2.5°F) per minute. It was then held at 857.2°C (1575°F) for 12 hours, and then cooled to near ambient temperature before discharge and sampling. This normal activation was found to have a Cr(VI) concentration of 0.3865 wt%. Thus, of the 1% total Cr present, only about 39% was converted to Cr(VI).

In a second activation, the same vessel was charged with 136.1 kg (300 lbs) of EP30X and 136.1 kg (300 lbs) of silica that had similar porosity as EP30X but lacking the chromium. The combined 272.2 kg (600 lbs) of catalyst and silica mixture (Sample 9B) was then activated under identical conditions as described previously. The Cr(VI) content was found to be 0.3938 wt%. This result demonstrates that about 79% of the total Cr present was converted to Cr(VI) due to the migration of inactive Cr(III) from the EP30X to form active Cr(VI) on the accompanying silica.

Both samples 9A and 9B were then tested for polymerization activity. Sample 9A produced activities of 680.4-907.2 kg/kg/h (1500-2000 lb/lb/h) while sample 9B produced similar activities of 725.7-952.5 kg/kg/h (1600-2100 lb/lb/h). The similarity in polymerization activities for both samples is another signal that the Cr transferred were to become active on the silica, otherwise the activity of sample 9B should have been about half of the activity of sample 9A. Both samples 9A and 9B produced comparable melt index values of 0.85 to 0.90 and HLMI vales of 50 to 55. Thus sample 9B suffered no loss in activity or melt index potential even though it contained only half the total Cr. This indicates a more efficient use of the Cr to form Cr(VI).

## Claims

1. A method comprising:
contacting a donor support comprising a metal or metal-containing compound and a base support (i.e., a metallized support) with a recipient support which does not contain a polymerization active compound, species or precursor to generate a mixture, wherein the base support and the recipient support are selected from the group consisting of alumina, silica-titania, aluminophosphate, zirconia, titania, or combinations thereof; and heating the mixture in a range of from 400°C to 1000°C to produce a polymerization catalyst, wherein a metal or a metal- containing compound migrates from the donor support to the recipient support.

2. The method of claim 1 wherein the donor support is formed via contact with a chromium- containing compound.

3. The method of claim 1 wherein the donor support has not been heated to equal to or greater than 200°C prior to contact with the recipient support, or wherein the donor support has been heated to equal to or greater than 200°C prior to contact with the recipient support.

4. The method of claim 1 wherein the donor support has a surface area in the range of from 10 m²/g to 1000 m²/g.

5. The method of claim 2 wherein the chromium-containing compound is a water-soluble compound.

6. The method of claim 2 wherein the chromium-containing compound is a hydrocarbon- soluble compound, or wherein the donor support comprises from 0.0001% to 15% chromium by final weight of the original catalyst.

7. The method of claim 1 wherein the recipient support is a support that has not been contacted with and/or does not comprise a polymerization active compound.

8. The method of claim 1 wherein the recipient support has a surface area in a range of from 10 m²/g to 1000 m²/g or wherein the donor support and recipient support are contacted at a ratio of from about 1:1.

9. The method of claim 1 wherein the contacting occurs via dry mixing of the donor support and the recipient support.

10. The method of claim 1 wherein the contacting occurs in a fixed bed or fluidized bed.

11. The method of claim 1 wherein the polymerization catalyst has an increased amount of the chromium hexavalent species when compared to the donor support.

## Patentansprüche

1. Verfahren, umfassend:
In-Kontakt-Bringen eines Donorträgers, der ein Metall oder eine metallhaltige Verbindung und einen Basisträger (d.h. einen metallisierten Träger) umfasst, mit einem Empfängerträger, der keine(n) polymerisationsaktive(n) Verbindung, Spezies oder Vorläufer enthält, um ein Gemisch zu erzeugen, wobei der Basisträger und der Empfängerträger ausgewählt sind aus der Gruppe bestehend aus Aluminiumoxid, Siliciumdioxid-Titanoxid, Aluminophosphat, Zirkonoxid, Titanoxid oder Kombinationen davon; und Erhitzen des Gemischs in einem Bereich von 400 °C bis 1000 °C, um einen Polymerisationskatalysator herzustellen, wobei ein Metall oder eine metallhaltige Verbindung von dem Donorträger zu dem Empfängerträger wandert.

2. Verfahren nach Anspruch 1, wobei der Donorträger durch den Kontakt mit einer chromhaltigen Verbindung gebildet wird.

3. Verfahren nach Anspruch 1, wobei der Donorträger vor dem Kontakt mit dem Empfängerträger nicht auf 200 °C oder mehr erhitzt wurde oder wobei der Donorträger vor dem Kontakt mit dem Empfängerträger auf 200 °C oder mehr erhitzt wurde.

4. Verfahren nach Anspruch 1, wobei der Donorträger eine Oberfläche im Bereich von 10 m²/g bis 1000 m²/g aufweist.

5. Verfahren nach Anspruch 2, wobei die chromhaltige Verbindung eine wasserlösliche Verbindung ist.

6. Verfahren nach Anspruch 2, wobei die chromhaltige Verbindung eine kohlenwasserstofflösliche Verbindung ist oder wobei der Donorträger von 0,0001 % bis 15 % Chrom, bezogen auf das Endgewicht des ursprünglichen Katalysators, umfasst.

7. Verfahren nach Anspruch 1, wobei der Empfängerträger ein Träger ist, der nicht mit einer polymerisationsaktiven Verbindung in Kontakt gebracht wurde und/oder eine solche nicht umfasst.

8. Verfahren nach Anspruch 1, wobei der Empfängerträger eine Oberfläche im Bereich von 10 m²/g bis 1000 m²/g aufweist oder wobei der Donorträger und der Empfängerträger in einem Verhältnis von etwa 1:1 in Kontakt gebracht werden.

9. Verfahren nach Anspruch 1, wobei das In-Kontakt-Bringen durch Trockenmischen von Donorträger und Empfängerträger erfolgt.

10. Verfahren nach Anspruch 1, wobei das In-Kontakt-Bringen in einem Festbett oder in einer Wirbelschicht erfolgt.

11. Verfahren nach Anspruch 1, wobei der Polymerisationskatalysator eine im Vergleich zum Donorträger erhöhte Menge der sechswertigen Chromspezies aufweist.

## Revendications

1. Procédé comprenant les étapes suivantes :
mettre en contact un support donneur, comprenant un métal ou un composé contenant un métal et un support de base (c'est-à-dire un support métallisé), avec un support receveur qui ne contient pas de composé actif, d'espèce ou de précurseur de polymérisation pour générer un mélange, le support de base et le support receveur étant choisis dans le groupe constitué d'alumine, de silice-oxyde de titane, d'aluminophosphate, de zircone, d'oxyde de titane ou de combinaisons de ceux-ci ; et
chauffer le mélange dans une gamme de températures allant de 400 °C à 1000 °C pour produire un catalyseur de polymérisation, un métal ou un composé contenant un métal migrant du support donneur au support receveur.

2. Procédé selon la revendication 1, dans lequel le support donneur est formé par contact avec un composé contenant du chrome.

3. Procédé selon la revendication 1, dans lequel le support donneur n'a pas été chauffé à plus de 200 °C avant le contact avec le support receveur, ou dans lequel le support donneur a été chauffé à 200 °C ou plus avant contact avec le support receveur.

4. Procédé selon la revendication 1, dans lequel le support donneur a une aire dans la gamme allant de 10 m²/g à 1000 m²/g.

5. Procédé selon la revendication 2, dans lequel le composé contenant du chrome est un composé soluble dans l'eau.

6. Procédé selon la revendication 2, dans lequel le composé contenant du chrome est un composé soluble dans les hydrocarbures, ou dans lequel le support donneur comprend de 0,0001 % à 15 % de chrome en poids final du catalyseur d'origine.

7. Procédé selon la revendication 1, dans lequel le support receveur est un support qui n'a pas été mis en contact avec un composé actif de polymérisation et/ou qui ne compromet pas celui-ci.

8. Procédé selon la revendication 1, dans lequel le support receveur a une aire dans la gamme allant de 10 m²/g à 1000 m²/g, ou dans lequel le support donneur et le support receveur sont mis en contact selon un rapport d'environ 1:1.

9. Procédé selon la revendication 1, dans lequel la mise en contact est effectuée par mélange à sec du support donneur et du support receveur.

10. Procédé selon la revendication 1, dans lequel la mise en contact est effectuée dans un lit fixe ou dans un lit fluidisé.

11. Procédé selon la revendication 1, dans lequel le catalyseur de polymérisation comporte une quantité accrue de l'espèce de chrome hexavalent par rapport au support donneur.
